# FASCICULE DE BREVET EUROPEEN

(11) **EP 4 010 237 B1**
(45) Date de publication et mention de la délivrance du brevet: **26.07.2023**
(21) Numéro de dépôt: 20820251.5
(22) Date de dépôt: 03.08.2020
(51) Int. Cl.: B62D 35/02, B62D 65/16, B60R 13/08

(54) **DEFLECTEUR AERODYNAMIQUE SOUS PLANCHER AVEC DISPOSITIF DE PRE-MAINTIEN**
AERODYNAMISCHER UNTERBODENABLENKER MIT EINER VORHALTEVORRICHTUNG
AERODYNAMIC UNDERFLOOR DEFLECTOR HAVING A PRE-HOLDING DEVICE

(30) Priorité: 09.08.2019 FR 1909110
(43) Date de publication de la demande: 15.06.2022
(73) Titulaire: PSA Automobiles SA, 78300 Poissy (FR)
(72) Inventeur: BERTH, Stephane, 92320 CHATILLON (FR); PINSON, Mathieu, 77400 THORIGNY SUR MARNE (FR)
(86) Numéro de dépôt international: PCT/FR2020/051427
(87) Numéro de publication internationale: WO 2021/028631

(56) Documents cités:
- EP-A1- 2 623 401
- WO-A1-2020/030862
- FR-A1- 3 071 218

## Description

### Domaine technique

L'invention a trait au domaine des véhicules automobiles et plus particulièrement à la fixation de déflecteur aérodynamique sous le plancher des véhicules.

### Technique antérieure

Le plancher des véhicules automobiles est généralement pourvu de déflecteurs aérodynamiques ou aérauliques. Ces déflecteurs permettent aux véhicules, lorsqu'ils sont en mouvement, d'avoir une meilleure pénétration dans l'air et donc de limiter les pertes par trainée, couramment exprimée par le coefficient de trainée (Cx), ce qui se traduit par une diminution en consommation de carburant et en émission de polluants.

Du fait de leur taille et de leur poids non négligeables, l'installation sur les lignes d'assemblage des déflecteurs aérodynamiques sous le plancher des véhicules automobiles peut s'avérer être une opération physiquement difficile à effectuer par un seul opérateur. Ceci d'autant plus que pour des raisons de prévention de risques de santé pouvant être occasionnés par des postures difficiles et des efforts répétés, des normes de sécurité n'autorisent pas un opérateur à soulever, seul, une pièce de plus de 5kg au-dessus de la hauteur de son coeur.

Il existe des systèmes de pré-maintien des déflecteurs aérodynamiques, tel est le cas notamment des moyens de fixation décrits dans les documents de brevet publiés FR 3 008 373 A1,EP2623401, mais outre le fait que ces systèmes concernent des déflecteurs de pare-chocs avant, c'est-à-dire de taille sensiblement inférieure à ceux destinés à être fixés sous le plancher des véhicules, ces systèmes de pré-maintien sont également fragiles et peuvent, s'ils sont transposés au montage d'un déflecteur sous plancher, entraîner la désolidarisation de ce dernier au cours de son installation.

### Exposé de l'invention

L'invention a pour objectif de pallier au moins un des inconvénients de l'état de la technique susmentionné. Plus particulièrement, l'invention a pour objectif de rendre plus facile et plus sécurisée la mise en place par un seul opérateur, d'un déflecteur aérodynamique ou aéraulique sous le plancher d'un véhicule automobile, et ceci de façon simple et rapide à mettre en oeuvre sur une ligne de montage.

A cet effet, l'invention a pour objet un déflecteur aérodynamique destiné à être fixé sous un plancher de véhicule automobile, comprenant un panneau destiné à recouvrir le plancher et des moyens de fixation audit plancher, solidaires avec le panneau, remarquable en ce que les moyens de fixation comprennent, à une extrémité longitudinale du panneau et à chaque bord latéral dudit panneau, une cage faisant saillie du panneau, ouverte latéralement vers l'intérieur et présentant une encoche, de manière à ce que chacune des deux cages puisse s'engager, via l'encoche, avec un crochet sur le véhicule, s'étendant latéralement, et permettre une rotation du déflecteur en vue de son montage.

Selon un mode avantageux de l'invention, chacune des deux cages comprend une paroi distale par rapport au panneau, délimitant l'ouverture et dans laquelle l'encoche est formée.

Selon un mode avantageux de l'invention, pour chacune des deux cages, la paroi distale s'étend parallèlement au panneau jusqu'à l'extrémité longitudinale du panneau, l'encoche étant à distance de ladite extrémité, de manière à permettre un accrochage des deux cages aux crochets sur le véhicule lorsque le déflecteur est à la verticale.

Selon un mode avantageux de l'invention, chacune des deux cages est adjacente à un bord transversal d'extrémité du panneau.

Selon un mode avantageux de l'invention, le panneau est ajouré au niveau de chacune des deux cages.

L'invention a aussi pour objet un véhicule automobile comprenant une structure de soubassement avec un plancher ; et un déflecteur aérodynamique fixé sous le plancher ; remarquable en ce que le déflecteur aérodynamique est conforme à l'invention, la structure de carrosserie comprend deux crochets disposés latéralement au plancher et s'étendant latéralement de manière opposée et s'engageant avec les deux cages du déflecteur aérodynamique.

Selon un mode avantageux de l'invention, chacun des deux crochets forme une patte généralement horizontale.

Selon un mode avantageux de l'invention, chacune des pattes présente une hauteur et une largeur suivant une direction longitudinale, l'encoche correspondante du déflecteur aérodynamique présentant une largeur supérieure à la hauteur de ladite patte et inférieure à la largeur de ladite patte, de manière à permettre l'engagement des deux cages, via les encoches, avec lesdites pattes lorsque le déflecteur aérodynamique est à la verticale et empêcher un désengagement lorsque le déflecteur aérodynamique est à l'horizontale.

Selon un mode avantageux de l'invention, le plancher comprend une portion arrière formant une marche montante vers l'arrière et pourvue de parois latérales, les crochets étant sur lesdites parois latérales.

L'invention a également pour objet un procédé de montage et fixation d'un déflecteur aérodynamique sous un plancher de véhicule automobile, comprenant les étapes suivantes : (a) positionnement du déflecteur aérodynamique sous et contre le plancher ; (b) fixation du déflecteur aérodynamique au plancher ; remarquable en ce que le véhicule est conforme à l'invention, l'étape (a) comprenant les sous-étapes suivantes : (a1) engagement des deux cages avec les crochets alors que le déflecteur aérodynamique est à la verticale ; (a2) rotation du déflecteur aérodynamique autour des crochets jusqu'à une position horizontale.

Les mesures de l'invention sont intéressantes en ce que les moyens de fixation du déflecteur aérodynamique selon l'invention sous le plancher d'un véhicule automobile, sont à la fois robustes et simples à mettre en oeuvre. Ces mesures sont d'autant plus intéressantes qu'elles permettent de faciliter la mise en place du panneau d'un déflecteur sur et contre le plancher d'un véhicule. Par leur structure et leur mode de fonctionnement, ces moyens de fixation permettent en effet à un unique opérateur de pré-maintenir solidement le panneau sur le plancher, avant de le basculer horizontalement contre celui-ci, en évitant de réaliser des efforts répétés et/ou des postures difficiles. En cela, les mesures de l'invention permettent donc d'améliorer l'ergonomie de montage des déflecteurs aérauliques sous plancher sans pour autant ralentir la productivité sur les chaînes de montage.

D'autres caractéristiques et avantages de la présente invention seront mieux compris à l'aide de la description et des dessins qui suivent.

### Brève description des dessins

[Fig 1] est une vue de dessous du soubassement d'un véhicule automobile avec un déflecteur aérodynamique selon l'invention, fixé au plancher dudit véhicule;
[Fig 2] représente une vue de dessus d'une portion arrière du déflecteur aérodynamique de la figure 1 ;
[Fig 3] est une vue de face du plancher du véhicule automobile sur lequel le déflecteur de la figure 1 est destiné à être fixé ;
[Fig 4] est une première vue en perspective du procédé de montage et de fixation d'un déflecteur aérodynamique selon l'invention sous le plancher d'un véhicule automobile ;
[Fig 5] est une deuxième vue en perspective du procédé de montage et de fixation d'un déflecteur aérodynamique selon l'invention sous le plancher d'un véhicule automobile ;
[Fig 6] est une troisième vue en perspective du procédé de montage et de fixation sous un plancher d'un déflecteur aérodynamique selon l'invention.

### Description détaillée

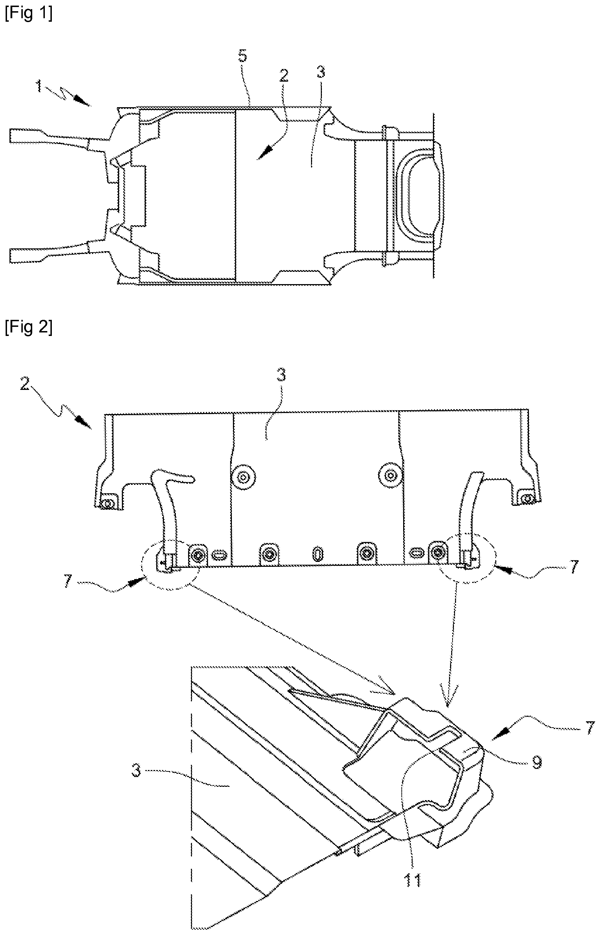

La figure 1 est une vue de dessous du soubassement d'un véhicule automobile avec un déflecteur aérodynamique selon l'invention, fixé au plancher dudit véhicule. En l'espèce le déflecteur aérodynamique 2 représenté sur la figure 1, est un déflecteur aérodynamique 2 sous plancher arrière. Il est constitué en particulier d'un panneau 3 et de moyens de fixation (non visibles) de ce panneau 3 au plancher 5 du véhicule 1. Les moyens de fixation comprennent en particulier deux cages destinées à s'engager avec deux crochets (non visibles sur la figure 1). Les cages sont positionnées en saillie sur le panneau 3 du déflecteur 2 de manière à pouvoir être engagées par les crochets situés sur le plancher lorsque le déflecteur 2 est positionné verticalement sous le plancher 5, et permettre une rotation du même déflecteur 2 en vue de sa fixation définitive sous le plancher 5 du véhicule 1.

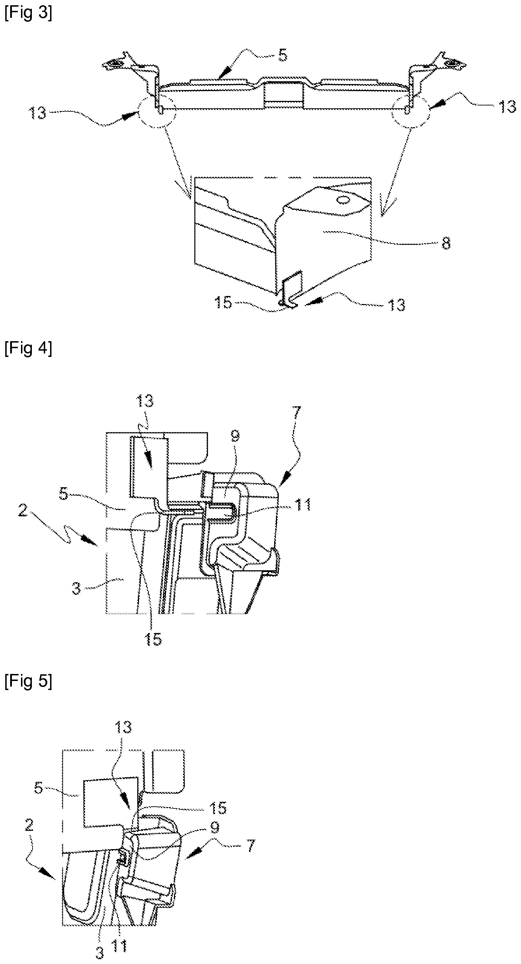

La figure 2 représente une vue de dessus d'une portion arrière du déflecteur aérodynamique de la figure 1 au niveau des deux cages de fixation. Comme illustré sur cette figure 2, chacune des cages 7 fait saillie sur un bord latéral du panneau 3 du déflecteur 2, au niveau d'une extrémité latérale de celui-ci. Une vue élargie permet d'observer plus précisément que les cages 7 sont chacune ouvertes latéralement vers l'intérieur du panneau 3 et sont chacune formées par une paroi distale 9 qui s'étend parallèlement au panneau jusqu'à l'extrémité longitudinale de celui-ci. Chaque paroi distale 9 délimite en fait l'ouverture intérieure de chacune des cages 7 et présente une encoche 11 qui est à distance de l'extrémité longitudinale du panneau 3. Ces encoches 11 ont pour rôle de permettre un accrochage de chacune des cages 7 à un crochet 13 du plancher 5 (crochets non visibles sur la figure 2, voir la figure 3) du véhicule lorsque le déflecteur 2 est positionné verticalement par un opérateur sur une ligne de montage (non représentée). En général et comme illustré sur la figure 2, le panneau 3 du déflecteur 2 est également ajouré au niveau de chacune des cages 7.

La figure 3 est une vue de face du plancher sur lequel le déflecteur de la figure 1 est fixé. Le plancher 5 comprend une portion arrière qui forme une marche montante dirigée vers l'arrière. Cette marche est pourvue de deux parois latérales 8 sur chacune desquelles est disposé un crochet de fixation 13. Ces crochets 13 s'étendent latéralement au plancher 5 et de manière opposée. Une vue élargie permet d'observer plus précisément que chacun de ces crochets 13 forme une patte 15. Ces dernières 15 sont généralement horizontales et ont une hauteur et une largeur suivant une direction longitudinale. Elles permettent aux crochets 13 de pouvoir être engagés avec les deux cages 7 (cages non visibles sur la figure 3, voir la figure 2) du déflecteur 2, lors de la mise en place du panneau 3 par un opérateur sur une ligne de montage (non représentée).

Il est important de noter que pour permettre l'engagement des deux cages 7, via les encoches 11, avec les pattes 15 des crochets 13 lorsque le panneau 3 du déflecteur 2 est à la verticale et empêcher également leur désengagement lorsque le panneau 3 est rabattu en position horizontale contre le plancher 5, il est nécessaire que les encoches 11 présentent une largeur supérieure à la hauteur des pattes 15 et inférieure à la largeur de ces mêmes pattes 15.

Les figures 4, 5 et 6 illustrent trois vues en perspective du déroulement du procédé de montage et de fixation d'un déflecteur aérodynamique selon l'invention sous le plancher d'un véhicule automobile. Le procédé comprend deux étapes. La première étape consiste au positionnement du panneau 3 du déflecteur 2 sous et contre le plancher 5, et comprend deux sous-étapes. La deuxième étape consiste quant-à-elle à la fixation définitive du même panneau 3 au plancher 5.

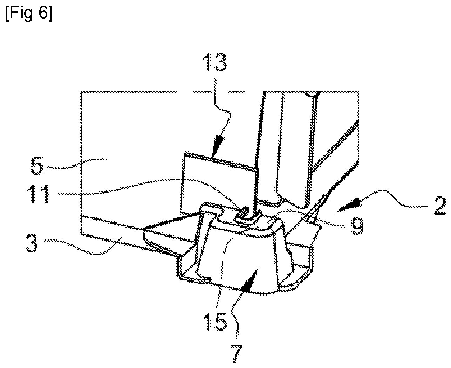

Les figures 4, 5 et 6 montrent plus particulièrement les deux sous-étapes de la première étape qui correspondent successivement, à l'engagement des deux cages 7 avec les crochets 13 alors que le déflecteur 2 est à la verticale (figures 4 et 5), puis à la rotation du panneau 3 du déflecteur 2 autour des crochets 13 jusqu'à une position horizontale (figure 6).

Sur chacune des figures 4, 5 et 6 sont représentés des moyens de fixation d'un déflecteur aérodynamique selon l'invention. En l'occurrence ces figures montrent les moyens de fixation situés sur le côté gauche du plancher d'un véhicule automobile sur lequel est agencé un tel déflecteur.

Sur les figures 4 et 5, le panneau 3 du déflecteur 1 est positionné verticalement par l'opérateur sous le plancher 5 de façon à engager la patte 15 de chacun des crochets 13 dans l'encoche 11 de la paroi distale 9 de la cage 7 correspondante, lesquelles cages 7 étant chacune adjacentes à un bord transversal d'extrémité du panneau 3.

Une fois les pattes 15 passées dans les encoches 11, une légère translation horizontale du panneau 3 permet alors qu'elles prennent appui contre l'intérieur des cages 7, ce qui aboutit au pré-maintien du panneau 3 au plancher 5 sans l'intervention de l'opérateur.

Puis, comme représenté sur la figure 6, une rotation du panneau 3 autour des crochets 13 jusqu'à une position horizontale permet de fixer celui-ci 3 au soubassement du véhicule (voir figure 1). Du fait de l'étape de pré-maintien vertical, le positionnement à l'horizontal du panneau 3 est ainsi réalisé sans que l'opérateur subisse la contrainte du poids de cette pièce 3.

## Revendications

1. Déflecteur aérodynamique (2) destiné à être fixé sous un plancher (5) de véhicule automobile (1), comprenant :
- un panneau (3) destiné à recouvrir le plancher (5); et
- des moyens de fixation audit plancher (5), solidaires avec le panneau (3); **caractérisé en ce que**
les moyens de fixation comprennent, à une extrémité longitudinale du panneau (3) et à chaque bord latéral dudit panneau (3), une cage (7) faisant saillie du panneau (3), ouverte latéralement vers l'intérieur et présentant une encoche (11), de manière à ce que chacune des deux cages (7) puisse s'engager, via l'encoche (11), avec un crochet (13) sur le véhicule (1), s'étendant latéralement, et permettre une rotation du déflecteur (2) en vue de son montage.

2. Déflecteur aérodynamique (2) selon la revendication 1, **caractérisé en ce que** chacune des deux cages (7) comprend une paroi distale (9) par rapport au panneau (3), délimitant l'ouverture et dans laquelle l'encoche (11) est formée.

3. Déflecteur aérodynamique (2) selon la revendication 2, **caractérisé en ce que**, pour chacune des deux cages (7), la paroi distale (9) s'étend parallèlement au panneau (3) jusqu'à l'extrémité longitudinale du panneau (3), l'encoche (11) étant à distance de ladite extrémité, de manière à permettre un accrochage des deux cages (7) aux crochets (13) sur le véhicule (1) lorsque le déflecteur (2) est à la verticale.

4. Déflecteur aérodynamique (2) selon l'une des revendications 1 à 3, **caractérisé en ce que** chacune des deux cages (7) est adjacente à un bord transversal d'extrémité du panneau (3).

5. Déflecteur aérodynamique (2) selon l'une des revendications 1 à 4, **caractérisé en ce que** le panneau (3) est ajouré au niveau de chacune des deux cages (7).

6. Véhicule automobile (1) comprenant :
- une structure de soubassement avec un plancher (5) ; et
- un déflecteur aérodynamique (2) fixé sous le plancher (5);
**caractérisé en ce que** le déflecteur aérodynamique (2) est selon l'une des revendications 1 à 5, la structure de carrosserie comprend deux crochets (13) disposés latéralement au plancher (5) s'étendant latéralement de manière opposée et s'engageant avec les deux cages (7) du déflecteur aérodynamique (2).

7. Véhicule automobile (1) selon la revendication 6, **caractérisé en ce que** chacun des deux crochets (13) forme une patte (15) généralement horizontale.

8. Véhicule automobile (1) selon la revendication 7, **caractérisé en ce que** chacune des pattes (15) présente une hauteur et une largeur suivant une direction longitudinale, l'encoche (11) correspondante du déflecteur aérodynamique (2) présentant une largeur supérieure à la hauteur de ladite patte (15) et inférieure à la largeur de ladite patte (15), de manière à permettre l'engagement des deux cages (7), via les encoches (11), avec lesdites pattes (15) lorsque le déflecteur aérodynamique (2) est à la verticale et empêcher un désengagement lorsque le déflecteur aérodynamique (2) est à l'horizontale.

9. Véhicule automobile (1) selon l'une des revendications 6 à 8, **caractérisé en ce que** le plancher (5) comprend une portion arrière formant une marche montante vers l'arrière et pourvue de parois latérales (8), les crochets (13) étant sur lesdites parois latérales (8).

10. Procédé de montage et fixation d'un déflecteur aérodynamique (2) sous un plancher (5) de véhicule automobile (1), comprenant les étapes suivantes :
(a) positionnement du déflecteur aérodynamique (2) sous et contre le plancher (5);
(b) fixation du déflecteur aérodynamique (2) au plancher (5);
**caractérisé en ce que** le véhicule (1) est selon l'une des revendications 6 à 9, l'étape (a) comprenant les sous-étapes suivantes :
(a1) engagement des deux cages (7) avec les crochets (13) alors que le déflecteur aérodynamique (2) est à la verticale ;
(a2) rotation du déflecteur aérodynamique (2) autour des crochets (13) jusqu'à une position horizontale.

## Patentansprüche

1. Aerodynamischer Deflektor (2) zur Befestigung unter einem Boden (5) eines Kraftfahrzeugs (1), umfassend:
- eine Platte (3) zur Abdeckung des Bodens (5); und
- Befestigungsmittel am Boden (5), die mit der Platte (3) verbunden sind;
**dadurch gekennzeichnet, dass**
Die Befestigungsmittel umfassen an einem Längsende der Platte (3) und an jedem Seitenrand der Platte (3) einen seitlich nach innen offenen, von der Platte (3) vorspringenden Käfig (7) mit einer Kerbe (11), sodass jede der beiden Käfige (7) über die Kerbe (11) mit einem Haken (13) am Fahrzeug (1) in Eingriff bringbar ist. sich seitlich erstreckt und eine Drehung des Deflektors (2) zur Montage ermöglicht.

2. Aerodynamischer Deflektor (2) nach Anspruch 1, **dadurch gekennzeichnet, dass** jedes der beiden Käfige (7) eine distale Wand (9) in Bezug auf die Platte (3) aufweist, die die Öffnung begrenzt und in der die Kerbe (11) ausgebildet ist.

3. Aerodynamischer Deflektor (2) nach Anspruch 2, **dadurch gekennzeichnet, dass** sich die distale Wand (9) für jedes der beiden Käfige (7) parallel zur Platte (3) bis zum Längsende der Platte (3) erstreckt, wobei die Kerbe (11) von dem Ende beabstandet ist, sodass die beiden Käfige (7) an den Haken (13) befestigt werden können das Fahrzeug (1), wenn sich der Deflektor (2) vertikal befindet.

4. Aerodynamischer Deflektor (2) nach einem der Ansprüche 1 bis 3, **dadurch gekennzeichnet, dass** jeder der beiden Käfige (7) an einen Endquerrand der Platte (3) angrenzt.

5. Aerodynamischer Deflektor (2) nach einem der Ansprüche 1 bis 4, **dadurch gekennzeichnet, dass** die Platte (3) an jedem der beiden Käfige (7) durchbrochen ist.

6. Kraftfahrzeug (1) mit:
- eine Unterkonstruktion mit einem Boden (5); und
- ein unter dem Boden (5) befestigter aerodynamischer Deflektor (2);
**Dadurch gekennzeichnet, dass** der aerodynamische Deflektor (2) nach einem der Ansprüche 1 bis 5 ausgebildet ist, wobei die Karosseriestruktur zwei seitlich am Boden (5) angeordnete, sich gegenüberliegend seitlich erstreckende Haken (13) aufweist, die mit den beiden Käfigen (7) des aerodynamischen Deflektors (2) in Eingriff stehen.

7. Kraftfahrzeug (1) nach Anspruch 6, **dadurch gekennzeichnet, dass** jeder der beiden Haken (13) eine im Wesentlichen horizontale Lasche (15) bildet.

8. Kraftfahrzeug (1) nach Anspruch 7, **dadurch gekennzeichnet, dass** jede der Laschen (15) eine Höhe und eine Breite in einer Längsrichtung aufweist, wobei die entsprechende Kerbe (11) der aerodynamischen Ablenkplatte (2) eine Breite aufweist, die größer als die Höhe der Lasche (15) und kleiner als die Breite der Lasche (15) ist, um das Eingreifen der beiden Käfige (7) zu ermöglichen über die Kerben (11) mit den Laschen (15), wenn sich der aerodynamische Deflektor (2) vertikal befindet, und ein Ausrücken verhindert, wenn sich der aerodynamische Deflektor (2) horizontal befindet.

9. Kraftfahrzeug (1) nach einem der Ansprüche 6 bis 8, **dadurch gekennzeichnet, dass** der Boden (5) einen hinteren Abschnitt umfasst, der einen Rückwärtsgang bildet und mit Seitenwänden (8) versehen ist, wobei die Haken (13) an den Seitenwänden (8) angeordnet sind.

10. Verfahren zum Montieren und Befestigen eines aerodynamischen Deflektors (2) unter einem Boden (5) eines Kraftfahrzeugs (1), umfassend die folgenden Schritte:
(a) Positionierung des aerodynamischen Deflektors (2) unter und gegen den Boden (5);
(b) Befestigung des aerodynamischen Leitblechs (2) am Boden (5);
**Dadurch gekennzeichnet, dass** das Fahrzeug (1) nach einem der Ansprüche 6 bis 9 ist, wobei Schritt (a) folgende Teilschritte umfasst:
(a1) Eingriff der beiden Käfige (7) mit den Haken (13), während der aerodynamische Deflektor (2) vertikal ist;
(a2) Drehung des aerodynamischen Deflektors (2) um die Haken (13) in eine horizontale Position.

## Claims

1. Aerodynamic deflector (2) intended to be fixed under a floor (5) of motor vehicle (1), including:
- a panel (3) to cover the floor (5); and
- means of attachment to the floor (5), in solidarity with the panel (3);
**characterized by**
the means of attachment include, at a longitudinal end of the panel (3) and at each lateral edge of the panel (3), a cage (7) protruding from the panel (3), opening laterally inward and having a notch (11), so that each of the two cages (7) can engage, via the notch (11), with a hook (13) on the vehicle (1), extending laterally, and allowing the deflector to rotate (2) for mounting.

2. Aerodynamic deflector (2) according to Claim 1, characterized that each of the two cages (7) includes a wall distal (9) from the panel (3), delimiting the opening and in which the notch (11) is formed.

3. Aerodynamic deflector (2) according to Claim 2, characterized that, for each of the two cages (7), the distal wall (9) extends parallel to the panel (3) to the longitudinal end of the panel (3), the notch (11) being at a distance from the said end, so as to allow the two cages (7) to be hooked (11) 3) on the vehicle (1) when the deflector (2) is vertical.

4. Aerodynamic deflector (2) according to one of claims 1 to 3, characterized that each of the two cages (7) is adjacent to a transverse edge of the panel (3).

5. Aerodynamic deflector (2) according to one of the claims 1 to 4, characterized as the panel (3) is updated at the level of each of the two cages (7).

6. Motor vehicle (1) comprising:
- a base structure with a floor (5); and
- an aerodynamic deflector (2) fixed under the floor (5);
characterized as the aerodynamic deflector (2) is in accordance with one of the claims 1 to 5, the body structure consists of two hooks (13) arranged laterally at the floor (5) extending laterally opposite and engaging with the two cages (7) of the aerodynamic deflector (2).

7. Motor vehicle (1) according to Claim 6, characterized as each of the two brackets (13) forms a generally horizontal leg (15).

8. Motor vehicle (1) according to Claim 7, characterized that each leg (15) has a height and width in a longitudinal direction, the corresponding notch (11) of the aerodynamic deflector (2) having a width greater than the height of the said leg (15) and less than the width of the said leg (15), so as to allow the engagement of the two cages (7), via the notches (11), with the said legs (15) when the aerodynamic deflector (2) is vertical and prevents disengagement when the aerodynamic deflector (2) is horizontal.

9. Motor vehicle (1) according to one of claims 6 to 8, **characterized by** the fact that the floor (5) consists of a rear portion forming an upward step and fitted with lateral walls (8), the brackets (13) being on the said side walls (8).

10. Installation process and attachment of an aerodynamic deflector (2) under a floor (5) of a motor vehicle (1), including the following steps:
(a) positioning of the aerodynamic deflector (2) under and against the floor (5);
(b) fixing the aerodynamic deflector (2) to the floor (5);
characterized as the vehicle (1) is in accordance with one of claims 6 to 9, step (a) includes the following substeps:
(a1) engagement of both cages (7) with hooks (13) while the aerodynamic deflector (2) is vertical;
(a2) rotation of the aerodynamic deflector (2) around the hooks (13) to a horizontal position.
